**Europäisches Patentamt**

**European Patent Office**

**Office européen des brevets**

(19)

(11) Veröffentlichungsnummer: **0 097 359**
**B1**

(12) # EUROPÄISCHE PATENTSCHRIFT

(45) Veröffentlichungstag der Patentschrift:
28.01.87

(21) Anmeldenummer: **83106037.1**

(22) Anmeldetag: **21.06.83**

(51) Int. Cl.⁴: **G 02 B 5/22, A 01 G 9/14**

(54) Strahlenschutzfilter für Pflanzen.

(30) Priorität: **23.06.82 DE 3223445**

(43) Veröffentlichungstag der Anmeldung:
**04.01.84 Patentblatt 84/1**

(45) Bekanntmachung des Hinweises auf die Patenterteilung:
**28.01.87 Patentblatt 87/5**

(84) Benannte Vertragsstaaten:
**AT BE CH DE FR GB IT LI NL**

(56) Entgegenhaltungen:
**EP - A - 0 077 496**
**AT - B - 270 288**
**FR - A - 1 203 571**
**FR - A - 1 465 462**
**FR - A - 2 216 906**
**US - A - 3 911 620**

**Die Akte enthält technische Angaben, die nach dem Eingang der Anmeldung eingereicht wurden und die nicht in dieser Patentschrift enthalten sind.**

(73) Patentinhaber: **Mutzhas, Maximilian F., Prof. Dr., Sonnenstrasse 17, D-8000 München 2 (DE)**

(72) Erfinder: **Mutzhas, Maximilian F., Prof. Dr., Sonnenstrasse 17, D-8000 München 2 (DE)**

(74) Vertreter: **Tetzner, Volkmar, Dr.-Ing. Dr. Jur., Van-Gogh-Strasse 3, D-8000 München 71 (DE)**

EP 0 097 359 B1

**Beschreibung**

Die Erfindung betrifft einen neuartigen Strahlenschutzfilter für Pflanzen.

Als Strahlenschutzfilter für Pflanzen werden bisher im wesentlichen Gewächshausverglasungen sowie Gartenbaufolien verwendet. Gewächshausverglasungen bestehen im allgemeinen aus Fensterglas, Drahtglas, Acrylglas, Polycarbonat oder aus glasfaserverstärktem Kunststoff. Gartenbaufolien bestehen in der Regel aus Polyäthylen, Polyvinylchlorid, Polyvinylfluorid oder aus Zelluloseacetat.

Die spektrale Transmission (d.h. das Verhältnis der vom Filter durchgelassenen Strahlung zur auftreffenden Strahlung) ist bei den bekannten Strahlenschutzfiltern im Bereich zwischen 400 und 2500 nm annähernd konstant und fällt unterhalb von 400 nm allmählich ab, wobei auch unterhalb von 330 nm noch beträchtliche Strahlungsanteile durchgelassen werden.

Die der Erfindung zugrundeliegenden eingehenden Untersuchungen zeigten, dass die bekannten Strahlenschutzfilter keine für die Pflanzen optimale spektrale Transmission besitzen. Der Erfindung liegt daher die Aufgabe zugrunde, einen neuartigen Strahlenschutzfilter zu entwickeln, der durch eine differenzierte Gestaltung der spektralen Transmission optimale Wachstumsbedingungen für die Pflanzen ergibt.

Aus der FR-A-221 690 6 ist ein Material für Pflanzenschutzfilter bekannt, welches den grünen Spektralbereich abschwächt.

Aus der US-A-3 911 620 ist ein folien- oder plattenförmiges Material bekannt, das UV-Strahlung und alternativ drei Spektralbereiche, die insgesamt von Blau bis Grün reichen, abschwächt. Diese Aufgabe wird erfindungsgemäss durch einen Strahlenschutzfilter gelöst, der folgende Werte und Verhältniszahlen der spektralen Transmission in den einzelnen Wellenlängenbereichen aufweist:

a) $T_1 < 0,02$
b) $T_3 > 0.4$
c) $T_3/T_4 > 1,5$
d) $T_4 < 0,4$
e) $T_5/T_4 > 2$
f) $T_6/T_4 > 2$

wobei bedeuten

$T_1$ = arithmetischer Mittelwert der spektralen Transmission zwischen 300 und 330 nm

$T_3$ = Mittelwert der spektralen Transmission zwischen 400 und 500 nm

$T_4$ = Mittelwert der spektralen Transmission zwischen 500 und 600 nm

$T_5$ = Mittelwert der spektralen Transmission zwischen 600 und 700 nm

$T_6$ = Mittelwert der spektralen Transmission zwischen 700 und 800 nm (Mittelwert jeweils arithmetischer Mittelwert).

Der Erfindung liegt die Erkenntnis zugrunde, dass die Strahlung im Wellenlängenbereich zwischen 500 und 600 nm photobiologisch unwichtig ist. Erfindungsgemäss wird daher die spektrale Transmission in diesem Wellenlängenbereich zwischen 500 und 600 nm wesentlich verringert ($T_4 < 0,4$). Dies ermöglicht es, bei gleicher Gesamt-Strahlungsbelastung die Transmission in den photobiologisch wichtigen Wellenlängenbereichen wesentlich anzuheben. Im Wellenlängenbereich zwischen 400 und 500 nm ist erfindungsgemäss der Mittelwert der spektralen Transmission $T_3 > 0,4$, wobei $T_3/T_4 > 1,5$. Für die photobiologisch gleichfalls wichtigen Wellenlängenbereiche von 600 bis 700 nm und 700 bis 800 nm ist erfindungsgemäss $T_5/T_4 > 2$ und $T_6/T_4 > 2$.

Der erfindungsgemässe Strahlenschutzfilter besitzt damit im Wellenlängenbereich zwischen 500 und 600 nm eine ausgesprochene «Senke» der spektralen Transmission.

Im Wellenlängenbereich von 400 bis 500 nm ist das kurzwellige Maximum von Photosynthese, Chlorophyllsynthese und Photomorphogenese vorhanden, ferner das Maximum des Phototropismus und der Absorption der Carotinoide.

Demgegenüber ist in dem erfindungsgemäss in der spektralen Transmission stark abgesenkten Wellenlängenbereich zwischen 500 und 600 nm ein Minimum der spektralen Wirkungsfunktionen von Photosynthese, Chlorophyllsynthese, Photomorphogenese und Phototropismus vorhanden, ferner ein Maximum der spektralen Reflexion der Blätter.

Im Wellenlängenbereich zwischen 600 und 700 nm stellt man demgegenüber ein langwelliges Maximum von Photosynthese, Chlorophyllsynthese und Photomorphogenese («Hellrot»-Phytochromreaktion) fest.

Im Wellenlängenbereich zwischen 700 und 800 nm findet sich schliesslich ein langwelliges Maximum der Photomorphogenese («Dunkelrot»-Phytchromreaktion).

Indem erfindungsgemäss der Mittelwert der spektralen Transmission in den photobiologisch besonders nützlichen Wellenlängenbereichen zwischen 400 und 500 nm sowie 600 bis 800 nm möglichst wenig, im unwichtigen Bereich zwischen 500 und 600 nm dagegen stark abgesenkt wird, erhält man bei gleicher Gesamt-Strahlungsbelastung der Pflanzen eine Optimierung der für den Pflanzenwuchs nützlichen Strahlung.

Gemäss einer zweckmässigen Ausgestaltung der Erfindung ist im Wellenlängenbereich zwischen 300 und 330 nm der arithmetische Mittelwert der spektralen Transmission $T_1 < 0,01$.

Eingehende Untersuchungen zeigten nämlich, dass in diesem Wellenlängenbereich selbst kleine Strahlungsanteile, wie sie bei den bekannten Strahlenschutzfiltern vorhanden sind, erhebliche Pflanzenschädigungen verursachen (Dimerenbildung in der Desoxyribonukleinsäure (DNS) in Zellkernen und Chloroplasten, Photodestruktion von Pigmenten, Veränderungen von Proteinen, Zusammenbrechen von Zellwänden der Epidermis, Verminderung der Photosyntheseaktivität, Verringerung von Wachstum und Ertrag). Durch die Verringerung der Strahlung zwischen 300 und 330 nm ist es unter Anwendung des erfindungsgemässen Strahlenschutzfilters möglich, in Hochgebirgsregionen sowie in Gebieten mit hohem Zenit-Sonnenstand (äquatornahe Regionen) mit Erfolg Pflanzen zu züchten, die dort bisher wegen des hohen Strahlungsanteiles zwischen 300 und 330 nm nicht gediehen. Dies gilt besonders unter Berücksichtigung einer durch Fluorkohlenwasserstoffe von Treibgasen bzw. durch Abgase hochfliegender Flugzeuge verringerten Ozonkonzentration der Troposphäre und Atmosphäre, die zu einer Zunahme der Strahlung unter 330 nm führt. Gemäss einer weiteren zweckmässigen Ausgestaltung des erfindungsgemässen Strahlenschutzfilters wird für den Wellenlängenbereich zwischen 330 und 400 nm eine spektrale Transmission $T_2$ gewählt, bei der sich $T_2/T_4 > 1$, vorzugsweise $T_2/T_4 > 1{,}5$ ergibt.

In diesem Wellenlängenbereich erfolgt durch Monomerisierung von Dimeren in der DNS eine Photoreaktivation, ferner spielen sich hier biologisch wichtige Vorgänge der Photosynthese, der Chlorophyllsynthese und der Photomorphogenese ab. In diesem Bereich sehen ferner Insektenaugen, was für die Befruchtung der Pflanzen wichtig ist.

Bevorzugter Werte der spektralen Transmission in den einzelnen Wellenlängenbereichen sind ferner Gegenstand der Unteransprüche 4 bis 6. Vorteilhaft ist hiernach auch eine Verringerung der spektralen Transmission in den Wellenlängenbereichen über 800 nm, um auf diese Weise für eine bestimmte Gesamt-Strahlungsbelastung der Pflanzen ein Maximum an Strahlung in den biologisch wichtigen Strahlungsbereichen zwischen 330 und 500 nm sowie zwischen 600 und 800 nm zu erzielen.

Ein Strahlenschutzfilter mit der spektralen Transmission gemäss Anspruch 1 lässt sich aus Platten oder Folien aus Kunststoffmaterial, wie Polyvinylchlorid, Polyäthylen, Polymethacrylsäuremethylester, Polyester, Polyäthylenterephthalat, Polycarbonat, herstellen, in das Farbstoffe eingebettet sind, deren abfallende Absorptionskante zwischen 450 und 500 nm und deren ansteigende Absorptionskante zwischen 575 und 625 nm liegt.

Als Farbstoffe sind insbesondere geeignet: Monoazo-, Diazo-, Antrachinon-, Phthalocyanin, Perylen-, Quinakridon-Farbstoffe sowie fein gemahlenes Farbglaspulver.

Um dem Strahlenschutzfilter die zusätzliche Charakteristik gemäss Anspruch 2 zu geben, werden in das Kunststoffmaterial organische, UV-absorbierende Substanzen mit steiler, zwischen 330 und 360 nm liegender Absorptionskante eingebettet. Als solche UV-absorbierende Substanzen sind geeignet: Benzophenone, Benzotriazole, Verbindungen der Salicyl-, Zimt- und Oxalsäure.

Die nach den Ansprüchen 5 und 6 vorgesehene Schwächung der Strahlung oberhalb von 800 nm kann durch eine zusätzliche Wasserschicht erfolgen. Zu diesem Zweck kann eine mit wasserführenden Kanälen versehene Kunststoffplatte oder eine mit noppenartigen Vorsprüngen (zur Bildung eines wasserführenden Hohlraumes) versehene Kunststoff-Folie Verwendung finden. Da das zur Schwächung der langwelligen Strahlung verwendete Wasser durch die Strahlung aufgeheizt wird, sind die verschiedensten wärmetechnischen Nutzanwendungen möglich, was jedoch im Rahmen dieser Erfindung nicht näher dargelegt werden soll.

Der Strahlenschutzfilter kann auch aus Glas bestehen (vgl. Ansprüche 12 und 13). Die Erfindung wird anhand der Zeichnung näher erläutert. In der Zeichnung zeigen

Fig. 1 ein Diagramm der spektralen Transmission (spektrale Transmission T in Abhängigkeit von der Wellenlänge $\lambda$ für zwei bekannte Strahlenschutzfilter;

Fig. 2 ein Diagramm entsprechend Fig. 1 für drei erfindungsgemässe Strahlenschutzfilter (Wellenlängenbereich zwischen 300 und 800 nm);

Fig. 3 ein Diagramm (Wellenlängenbreich zwischen 800 und 2500 nm) für einen erfindungsgemässen Strahlenschutzfilter (Folie) mit und ohne Wasser;

Fig. 4 ein Diagramm gemäss Fig. 3 für einen erfindungsgemässen Strahlenschutzfilter (Platte) mit und ohne Wasser;

Fig. 5 und 6 Schemadarstellungen von zwei erfindungsgemässen Strahlenschutzfiltern (mit Wasserschicht).

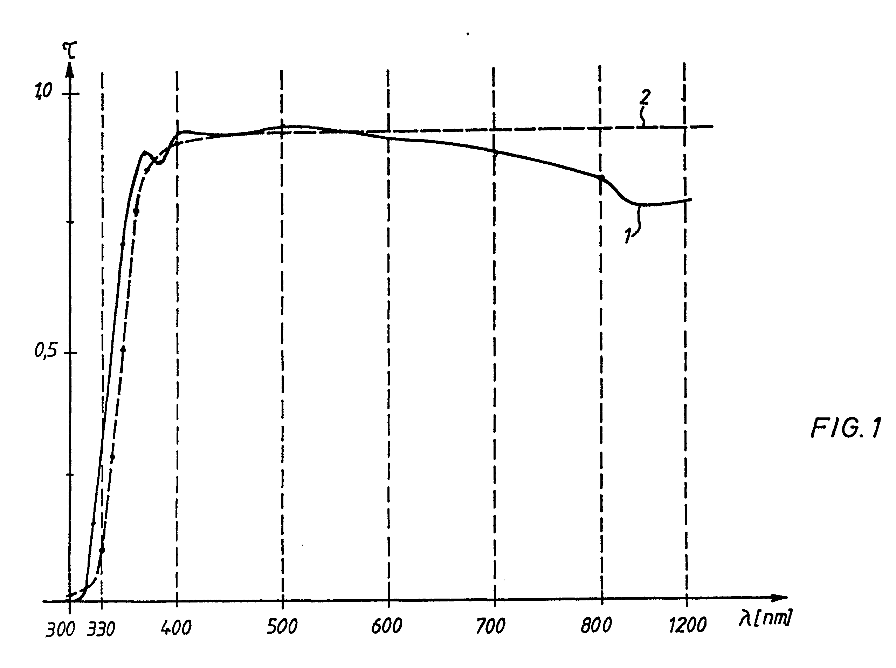

Das Diagramm gemäss Fig. 1 zeigt den Verlauf der spektralen Transmission (im Bereich von 300 bis 1200 nm) für zwei bekannte Strahlenschutzfilter. Die Kurve 1 zeigt die Transmission für einen Strahlenschutzfilter aus Glas (4 m), die Kuve 2 die Transmission für eine Gartenbaufolie aus PVC (0,2 m).

Man erkennt, dass die Transmission im Bereich zwischen 400 und 800 nm annähernd konstant ist und dass unterhalb von 330 nm noch ein beträchtlicher Strahlungsanteil vorhanden ist.

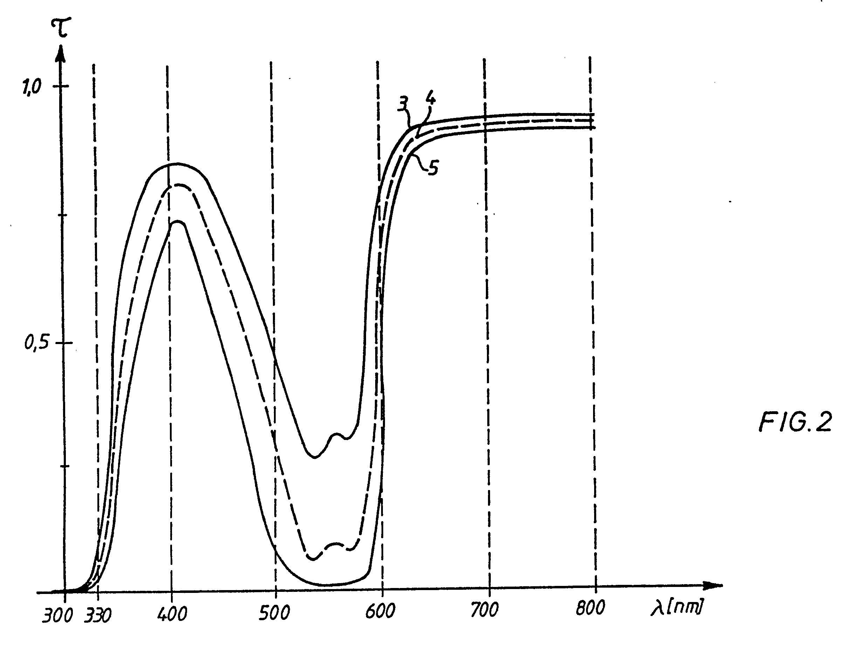

Fig. 2 veranschaulicht demgegenüber die Verhältnisse bei dem erfindungsgemässen Strahlenschutzfilter (drei unterschiedliche Ausführungen entsprechend den Kurven 3, 4 und 5). In allen drei Fällen ist die ausgeprägte Senke der spektralen Transmission im Wellenlängenbereich zwischen 500 und 600 nm zu erkennen, ebenso die starke Verringerung der Strahlung im Wellenlängenbereich zwischen 300 und 330 nm.

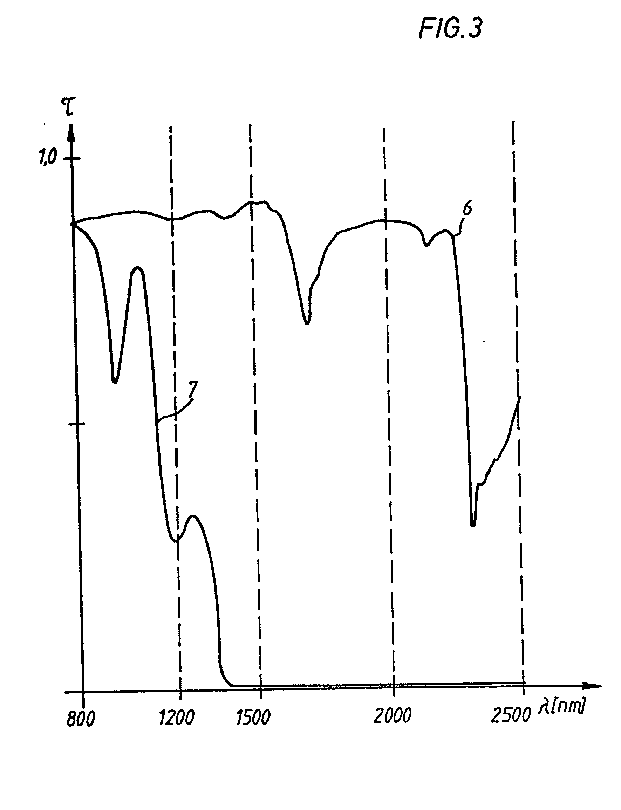

Das Diagramm gemäss Fig. 3 zeigt für den Wellenlängenbereich zwischen 800 und 2500 nm in Kurve 6 die spektrale Transmission für einen erfindungsgemässen Strahlenschutzfilter, bestehend aus einer 0,3 mm starken PVC-Folie und in Kuve 7 die spektrale Transmission für einen Strahlenschutzfilter, bestehend aus zwei PVC-Folien von 0,3 mm Stärke mit einer dazwischen befindlichen Wasserschicht von 10 mm. Man erkennt die hierdurch erzielte starke Verringerung der Transmission im Wellenlängenbereich oberhalb von 800 nm.

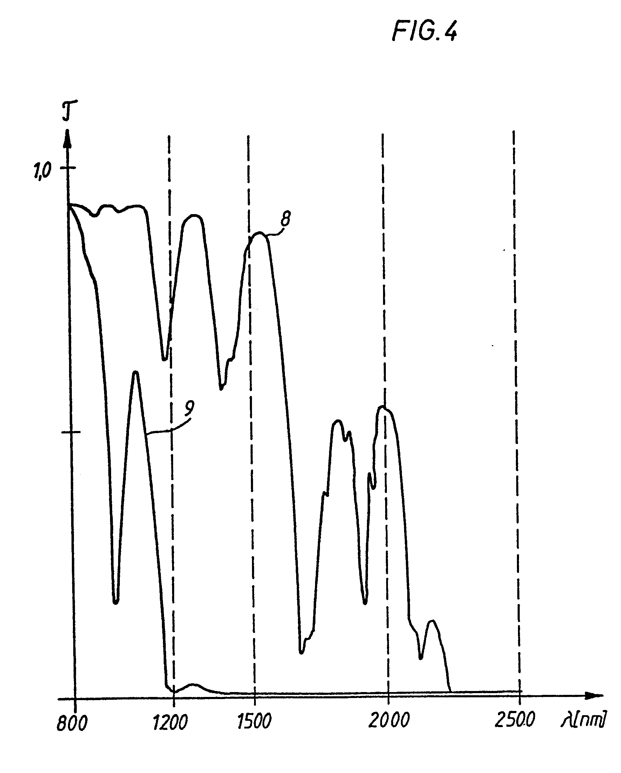

Fig. 4 veranschaulicht – wiederum für den Wellenlängenbereich zwischen 800 und 2500 nm – in Kuve 8 die spektrale Transmission für einen erfindungsgemässen Strahlenschutzfilter, bestehend aus einer Kunststoffplatte von 4 mm Stärke und in Kurve 9 die spektrale Transmission für einen erfindungsgemässen Strahlenschutzfilter aus einer Kunststoff-Stegdoppelplatte von je 2 mm Stärke und einer Wasserschicht von 36 mm Stärke.

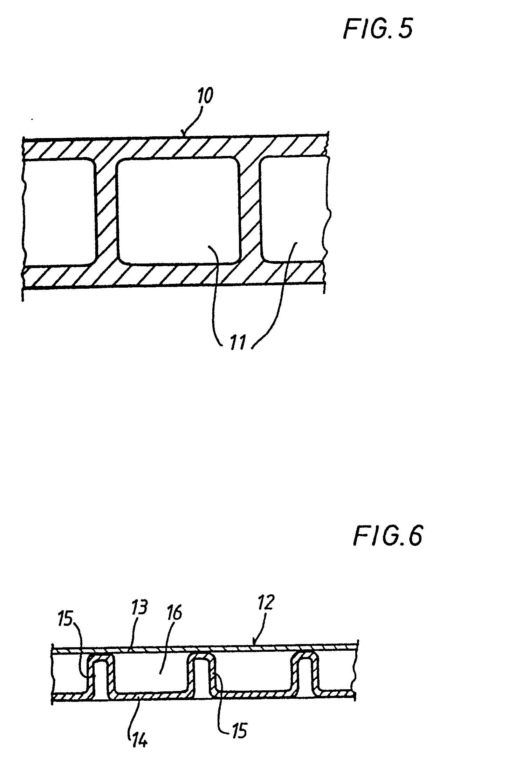

Fig. 5 veranschaulicht im Schnitt einen aus einer Stegdoppelplatte bestehenden Strahlenschutzfilter 10, der mit Wasser gefüllte Kammern 11 aufweist.

Fig. 6 veranschaulicht einen Strahlenschutzfilter 12, bestehend aus zwei übereinander angeordneten Folien 13, 14, wobei die Folie 14 mit vorspringenden Noppen 15 versehen ist, wodurch sich gleichfalls zur Aufnahme einer Wasserschicht geeignete Hohlräume 16 ergeben.

Zur weiteren Erläuterung der Erfindung sei schliesslich die Zusammensetzung von zwei erfindungsgemässen Strahlenschutzfiltern genannt (Beispiele 1 und 2), mit denen sich die in Fig. 2 dargestellte Kurve 4 der spektralen Transmission erzielen lässt.

Beispiel 1
Folie 0,3 nm Stärke

| 2,2-Dihydroxy-4-Methoxy-benzophenon | 0,25% |
| Perylen-Rot-Pigmente | 1,00% |
| Weich-PVC | 98,75% |

Beispiel 2
Platte 4 mm Stärke
2-(2-Hydroxy-5-6-Oktyl-phenyl)-Benzotriazol

| | 0,02% |
| Quinakridon-Rot-Pigmente | 0,10% |
| Polymethylmethacrylat | 99,88% |

Beispiel 3
Kunststofflack, bestehend aus:

| 2-(2-Hydroxy-5-6-Oktyl-phenyl)-Benzotriazol | 3% |
| Quinakridon-Rot-Pigmente | 15% |
| farbloser Kunststofflack | 82% |

Beispiel 4
wasserlösliche Farbe, bestehend aus:
2-Hydroxy-4-Methoxy-5-sulfo-Benzophenon-Tri-

| hydrat | 4% |
| Azo-Farbstoff | 4% |
| Zelluloseäther | 1% |
| Polyacrylat | 6% |
| Wasser | 85% |

Ein wasserunlöslicher Lack (gemäss Beispiel 3) oder wasserlösliche Farbe (gemäss Beispiel 4) können z.B. auf der Innenseite eines transmittierenden Materials (etwa Glas, Kunststoffplatten oder Kunststoff-Folien von Gewächshäusern) aufgestrichen werden, um in Zeiten hoher Globalstrahlung den gewünschten Strahlenschutzfilter zu bilden. In Zeiten niedriger Globalstrahlung kann die Farbe bzw. der Lack abgewaschen bzw. abgekratzt werden.

## Patentansprüche

1. Strahlenschutzfilter für Pflanzen, gekennzeichnet durch folgende Transmissionswerte:

a) $T_1 < 0,02$
b) $T_3 > 0,4$
c) $T_3 T_4 > 1,5$
d) $T_4 < 0,4$
e) $T_5/T_4 > 2$
f) $T_6/T_4 > 2$

wobei bedeuten
$T_1$ = arithmetischer Mittelwert der spektralen Transmission zwischen 300 und 330 nm,
$T_3$ = arithmetischer Mittelwert der spektralen Transmission zwischen 400 und 500 nm,
$T_4$ = arithmetischer Mittelwert der spektralen Transmission zwischen 500 und 600 nm,
$T_5$ = arithmetischer Mittelwert der spektralen Transmission zwischen 600 und 700 nm,
$T_6$ = arithmetischer Mittelwert der spektralen Transmission zwischen 700 und 800 nm.

2. Strahlenschutzfilter nach Anspruch 1, gekennzeichnet durch
$T_1 < 0,01$.

3. Strahlenschutzfilter nach Anspruch 1, gekennzeichnet durch
$T_2/T_4 > 1$

vorzugsweise $T_2/T_4 > 1,5$
wobei bedeuten
$T_2$ = Mittelwert der spektralen Transmission zwischen 330 und 400 nm,
$T_4$ = Mittelwert der spektralen Transmission zwischen 500 und 600 nm.

4. Strahlenschutzfilter nach Anspruch 1, gekennzeichnet durch

a) $T_3 > 0,5$
b) $T_3/T_4 > 2$
c) $T_4 < 0,3$
d) $T_5/T_4 > 2,5$
e) $T_6/T_4 > 2,5$

5. Strahlenschutzfilter nach Anspruch 1, gekennzeichnet durch
$T_7 < 0,7$
vorzugsweise $T_7 < 0,4$
wobei bedeutet
$T_7$ = Mittelwert der spektralen Transmission zwischen 800 und 1200 nm.

6. Strahlenschutzfilter nach Anspruch 1, gekennzeichnet durch
$T_8 < 0,05$
vorzugsweise $T_8 < 0,02$
wobei bedeutet
$T_8$ = Mittelwert der spektralen Transmission zwischen 1200 und 3000 nm.

7. Strahlenschutzfilter nach Anspruch 1, gekennzeichnet durch Platten oder Folien aus Kunststoffmaterial, wie Polyvinylchlorid, Polyäthylen, Polymethacrylsäuremethylester, Polyester, Polyäthylenterephthalat, Polycarbonat, Fluorpolymere, in das Farbstoffe eingebettet sind, deren abfallende Absorptionskante zwischen 450 und 500 nm und deren ansteigende Absorptionskante zwischen 575 und 625 nm liegt.

8. Strahlenschutzfilter nach Anspruch 7, gekennzeichnet durch wenigstens einen der folgenden Farbstoffe: Monoazo-, Diazo-, Antrachinon-, Phthalocyanin-, Perylen-, Quinakridon-Farbstoffe sowie fein gemahlenes Farbglaspulver.

9. Strahlenschutzfilter nach Anspruch 7, dadurch gekennzeichnet, dass in das Kunststoffmaterial organische, UV-absorbierende Substanzen mit steiler, zwischen 330 und 360 nm liegender Absorptionskante eingebettet sind.

10. Strahlenschutzfilter nach Anspruch 9, gekennzeichnet durch wenigstens eine der folgenden UV-absorbierenden Substanzen: Benzophenone, Benzotriazole, Verbindungen der Salicyl-, Zimt- und Oxalsäure.

11. Strahlenschutzfilter nach den Ansprüchen 7 und 8, gekennzeichnet durch eine zusätzliche Schicht aus Wasser, Glyzerin, Glykol und/oder Gemischen dieser Stoffe zur Schwächung der Strahlung oberhalb von 800 nm.

12. Strahlenschutzfilter nach Anspruch 1, gekennzeichent durch eine Platte aus Glas, dem als Zuschlagstoffe ein oder mehrere Oxyde folgender Metalle beigegeben sind: Cer, Kobalt, Kupfer, Mangan, Nickel.

13. Strahlenschutzfilter nach Anspruch 1, gekennzeichnet durch eine Platte aus Glas, dem als Zuschlagstoff Ceroxyd sowie colloidal gelöstes Gold, Kupfer oder Selen beigegeben sind, wobei das Glas nach seiner Herstellung während 15 bis 45, vorzugsweise etwa 30 Minuten, auf eine Temperatur von 400 bis 600, vorzugsweise etwa 500°C, erwärmt wird.

14. Strahlenschutzfilter nach Anspruch 1, gekennzeichnet durch eine flüssige Zubereitung, die als wasserlösliche Farbe und/oder als wasserunlöslicher Lack auf einen transmittierenden Untergrund aufgebracht wird.

**Claims**

1. Radiation protection filter for plants, characterised by the following transmittance values:

a) $T_1 < 0,2$
b) $T_3 > 0,4$
c) $T_3/T_4 > 1,5$
d) $T_4 < 0,4$
e) $T_5/T_4 > 2$
f) $T_6/T_4 > 2$

whereby
$T_1$ = arithmetic mean value of spectral transmittance between 300 and 330 nm
$T_3$ = arithmetic mean value of spectral transmittance between 400 and 500 nm
$T_4$ = arithmetic mean value of spectral transmittance between 500 and 600 nm
$T_5$ = arithmetic mean value of spectral transmittance between 600 and 700 nm
$T_6$ = arithmetic mean value of spectral transmittance between 700 and 800 nm.

2. Radiation protection filter according claim 1, characterised by
$T_1 < 0,01$

3. Protection filter according claim 1, characterised by

$T_2/T_4 > 1$

preferably
$T_2/T_4 > 1,5$

whereby
$T_2$ = average os spectral transmittance between 330 and 400 nm
$T_4$ = average of spectral transmittance between 500 and 600 nm

4. Radiation protection filter according claim 1, characterised by

a) $T_3 > 0,5$
b) $T_3/T_4 > 2$
c) $T_4 < 0,3$
d) $T_5/T_4 > 2,5$
e) $T_6/T_4 > 2,5$

5. Radiation protection filter according to claim 1, characterised by
$T_7 < 0,7$

preferably
$T_7 < 0,4$

whereby
$T_7$ = average of spectral transmittance between 800 and 1200 nm

6. Radiation protection filter according to claim 1, characterised by
$T_8 < 0,05$

preferably
$T_8 < 0,02$

whereby
$T_8$ = average of spectral transmittance between 1200 and 3000 nm

7. Radiation protection filter according claim 1 characterised by plastic sheets of foils such as polyvinylchloride, polyethylene, polymethacrylate, polyester, polyethylene terepththalat, polycarbonate, fluoropolymer, pigments being embedded into said sheets or foils, the declining absorption edge of said pigments lying between 450 and 500 nm and their rising absorption edge between 575 and 625 nm.

8. Radiation protection filter according claim 7, characterised by at least one of the following pigments: monoazo, diazo, antrachinon, phthalocyanin, perylen and quinakridon as well as pulverized pigment glass.

9. Radiation protection filter according claim 7, characterised by organic UV absorbing substances with steep absorption edge lying between 330 and 360 nm embedded in the plastic material.

10. Radiation protection filter according claim 9, characterised by at least one of the following UV absorbing substances: benzophenone, benzotriazole, compositions comprising salicylic, cinnamic and oxalic acids.

11. Radiation protection filter according claims 7 and 8, characterised by an additional layer of water, glycerol, glycol and/or mixtures of said liquids for attenuating radiation above 800 nm.

12. Radiation protection filter according claim 1, characterised by a glass sheet with an addition of one or several oxides of the following metals: cerium, cobalt, copper, manganese, nickel.

13. Radiation protection filter according claim 1, characterised by a glass sheet with an addition of ceroxyc and colloidal dissolved gold, copper or selenium, the glass being heated after manufacture during 15 to 45 minutes, preferably about 30 minutes, at a temperature of 500 to 600°C, preferably about 500°C.

14. Radiation protection filter according claim 1, characterised by a liquid preparation which is applied to a transmitting base as water soluble colour and/or as water indissoluble lacquer.

**Revendications**

1. Filtre de protection contre les rayonnements pour plantes, caractérisé par les valeurs suivantes de transmission:

a) $T < 0,02$
b) $T > 0,4$
c) $T_3/T_4 > 1,5$
d) $T_4 < 0,4$
e) $T_5/T_4 > 2$
f) $T_6/T_4 > 2$

relations dans lesquelles:

$T_1$ = moyenne arithmétique de la transmission spectrale entre 300 et 330 nm,
$T_3$ = moyenne arithmétique de la transmission spectrale entre 400 et 500 nm,
$T_4$ = moyenne arithmétique de la transmission spectrale entre 500 et 600 nm,
$T_5$ = moyenne arithmétique de la transmission spectrale entre 600 et 700 nm,
$T_6$ = moyenne arithmétique de la transmission spectrale entre 700 et 800 nm.

2. Filtre de protection contre les rayonnements selon la revendication 2, caractérisé par:
$T_1 < 0,01$

3. Filtre de protection contre les rayonnements selon la revendication 1, caractérisé par:
$T_2/T_4 > 1$
de préférence $T_2/T_4 > 1,5$

relations dans lesquelles:

$T_2$ = moyenne de la transmission spectrale entre 330 et 400 nm,
$T_4$ = moyenne de la transmission spectrale entre 500 et 600 nm.

4. Filtre de protection contre les rayonnements selon la revendication 1, caractérisé par:

a) $T_3 > 0,5$
b) $T_3/T_4 > 2$
c) $T_4 < 0,3$
d) $T_5/T_4 > 2,5$
e) $T_6/T_4 > 2,5$

5. Filtre de protection contre les rayonnements selon la revendication 1, caractérisé par:

$T_7 < 0,7$
de préférence $T_7 < 0,4$

relations dans lesquelles:

$T_7$ = moyenne de la transmission spectrale entre 800 et 1200 nm.

6. Filtre de protection contre les rayonnements selon la revendication 1, caractérisé par:
$T_8 < 0,05$
de préférence $T_8 < 0,02$

relations dans lesquelles:

$T_8$ = moyenne de la transmission spectrale entre 1200 et 3000 nm.

7. Filtre de protection contre les rayonnements selon la revendication 1, caractérisé par des plaques ou des feuilles de matière synthétique telle que le chlorure de polyvinyle, le polyéthylène, le polyméthacrylate de méthyle, le polyester, le téréphtalate de polyéthylène, le polycarbonate, des polymères fluorés, dans lesquelles sont inclus des colorants dont l'arête descendante d'absorption est située entre 450 et 500 nm et dont l'arête ascendante d'absorption est située entre 575 et 625 nm.

8. Filtre de protection contre les rayonnements selon la revendication 7, caractérisé par au moins un des colorants suivants: colorants monoazoïques, diazoïques, antraquinoniques, à base de phtalocyanine, de perylène, de quinakridon, ainsi qu'une poudre finement moulue de verre coloré.

9. Filtre de protection contre les rayonnements selon la revendication 7, caractérisé en ce que des substances organiques, absorbant les UV et présentant une arête d'absorption à pente raide entre 330 et 360 nm, sont incluses dans la matière synthétique.

10 Filtre de protection contre les rayonnements selon la revendication 9, caractérisé par au moins une des substances suivantes, absorbant les UV: benzophénones, benzotriazoles, composés de l'acide salicylique, de l'acide cinnamique et de l'acide oxalique.

11. Filtre de protection contre les rayonnements selon les revendications 7 et 8, caractérisé par une couche complémentaire d'eau, de glycérine, de glycol et/ou de mélanges de ces substances destinées à atténuer le rayonnement au-dessus de 800 nm.

12 Filtre de protection contre les rayonnements selon la revendication 1, caractérisé par une plaque de verre à laquelle sont mélangés des additifs consistant en un ou plusieurs oxydes des métaux suivants: cérium, cobalt, cuivre, manganèse, nickel.

13. Filtre de protection contre les rayonnements selon la revendication 1, caractérisé par une plaque de verre à laquelle est mélangé un additif consistant en oxyde de cérium ainsi que de l'or, du cuivre ou du sélénium colloïdal dissous, le verre étant chauffé après sa fabrication pendant 15 à 45, de préférence pendant environ 30 min à une température de 400 à 600°C, de préférence d'environ 500°C.

14. Filtre de protection contre les rayonnements selon la revendication 1, caractérisé par une préparation liquide qui consiste en une couleur soluble dans l'eau et/ou un vernis insoluble dans l'eau et qui est déposé sur un substrat transmetteur.

*FIG.1*

FIG.2

*FIG.3*

## FIG. 4

FIG. 5

FIG. 6